# EUROPEAN PATENT APPLICATION

(11) **EP 1 857 560 A1**
(43) Date of publication of application: **21.11.2007**
(21) Application number: 06711999.0
(22) Date of filing: 19.01.2006
(51) Int. Cl.: C22B 9/16, B22D 21/04

(54) **METHOD OF MELTING MAGNESIUM AND MELTING APPARATUS**

(30) Priority: 20.01.2005 JP 2005012580
(71) Applicant: Taiyo Nippon Sanso Corporation, Shinagawa-ku, Tokyo 1428558 (JP); KABUSHIKI KAISHA TOKAI RIKA DENKI SEISAKUSHO, Niwa-gun, Aichi-ken, 480-0195 (JP)
(72) Inventor: SANUI, Hiroshi, -chome, Shinagawa-ku, Tokyo, 1428558 (JP); NOMURA, Yuji, -chome, Shinagawa-ku, Tokyo, 1428558 (JP); KATO, Toru, -260, Toyota, Oguchi-cho, Niwa-gun, Aich (JP); NAKAMURA, Toru, -260, Toyota, Oguchi-cho, Niwa-gun, Aich (JP)
(74) Representative: Smyth, Gyles Darren
(86) International application number: PCT/JP2006/300753
(87) International publication number: WO 2006/077931

(57) **Abstract**

An object of the present invention is to provide a melting method for magnesium or a magnesium alloy which detects certainly and immediately combustion of a magnesium melt and emits alarm immediately based on the detection results, and extinguishes immediately the magnesium combustion, in order to achieve the object, the present invention provide a method for melting magnesium while supplying a cover gas containing carbon dioxide and a fireproof agent in a furnace for melting magnesium and obtaining a magnesium melt to cover the surface of the magnesium melt, wherein concentration of carbon monoxide in the furnace or gas discharged from the furnace is measured and magnesium combustion in the furnace is detected based on the concentration of carbon monoxide.

## Description

### TECHNICAL FIELD

The present invention relates to a method and a melting apparatus for melting magnesium or a magnesium alloy and obtaining a magnesium melt or a magnesium alloy melt, in which combustion at the surface of the magnesium melt or the magnesium alloy melt is detected and rapidly extinguished.
Priority is claimed on Japanese Patent Application No. 2005-012580 filed on January 20, 2005, the contents of which are incorporated herein by reference.

### BACKGROUND ART

When magnesium or a magnesium alloy (hereinafter "magnesium" means both magnesium and a magnesium alloy in the present invention) is melted in a furnace to obtain a magnesium melt, the vicinity of the surface of the melt has been covered with a cover gas in order to prevent combustion of magnesium at the melt surface.
Examples of the cover gas include a gas in which a fireproof agent such as sulfur hexafluoride, and sulfur dioxide is diluted with an inactive gas such as nitrogen.

A reaction between the fireproof agent in the cover gas with the melt magnesium produces a protective film at the melt surface. The protective film blocks contact between the melt magnesium and oxygen in air, and thereby combustion of the magnesium melt is prevented.

If the magnesium melt burns by any chance, not only the furnace is damaged, an amount of the magnesium melt itself decreases and economical damage is caused, but also safety problem due to a fire hazard is caused. The combustion of a magnesium melt has been detected by detecting white smoke of magnesium oxide which is generated by combustion, or a temperature increase of the magnesium melt. In addition, combustion of a magnesium melt is also detected by detecting a temperature increase in a furnace as disclosed in Japanese Unexamined Patent Application, First Publication No. 2001-234253.

However, it is difficult to detect combustion of magnesium within a short time from combustion starts by detecting white smoke, temperature increase of the melt, or temperature increase in a furnace, and this has poor reliability.

### DISCLOSURE OF THE INVENTION

### PROBLEMS TO BE SOLVED BY THE PRESENT INVENTION

The problems to be solved by the present invention is to detect certainly and immediately combustion of a magnesium melt during magnesium melting, to extinguish immediately the magnesium combustion based on the detection results, and to set off an alarm.

### MEANS FOR SOLVING THE PROBLEM

In order to solve the problems, the present invention provides a method for melting magnesium while supplying a cover gas containing carbon dioxide and a fireproof agent in a furnace for melting magnesium and obtaining a magnesium melt to cover the surface of the magnesium melt, wherein concentration of carbon monoxide in the furnace or gas discharged from the furnace is measured and magnesium combustion in the furnace is detected based on the concentration of carbon monoxide.

In the method for melting magnesium, it is preferable that the magnesium combustion can be prevented by increasing a flow rate of the cover gas or concentration of the fireproof agent contained in the cover gas when magnesium combustion is confirmed.

In the method for melting magnesium, it is preferable that the fireproof agent be 1, 1, 1, 2, 2, 4, 5, 5, 5,-nonafluoro-4-(trifluoromethyl)-3-pentanone.

In addition, in order to solve the problems, the present invention provides a melting apparatus Tor magnesium comprising a furnace for melting magnesium and obtaining a magnesium melt; a cover gas supplying portion for supplying a cover gas containing carbon dioxide and a fireproof agent in the furnace; a carbon monoxide concentration meter for measuring concentration of carbon monoxide in the furnace or gas discharged from the furnace; and a control portion for controlling a supply rate of the fireproof agent in the furnace based on the concentration of carbon monoxide measured by the carbon monoxide concentration meter.

Furthermore, in order to solve the problems, the present invention provides another melting apparatus for magnesium comprising a furnace for melting magnesium and obtaining a magnesium melt; a cover gas supplying portion for supplying a cover gas containing carbon dioxide and a fireproof agent in the furnace; a carbon monoxide concentration meter for measuring concentration of carbon monoxide in the furnace or gas discharged from the furnace; and a control portion for controlling a supply rate of the cover gas in the furnace based on the concentration of carbon monoxide measured by the carbon monoxide concentration meter.

In these melting apparatus for magnesium, it is preferable that the control portion have signal generation function which emits a signal showing magnesium combustion when magnesium combustion is confirmed, and a display portion for showing magnesium combustion based on the signal.

### EFFECTS OF THE PRESENT INVENTION

The present inventors found that when carbon dioxide is added in a cover gas, and a magnesium melt burns, concentration of carbon monoxide in the cover gas immediately is increased. It is possible to detect and judge the combustion immediately and certainly by measuring the concentration of carbon monoxide. Therefore, if a magnesium melt burns by any chance, the combustion is promptly extinguished.

In addition, since combustion was prevented by constantly supplying excess flow rate of the cover gas or the fireproof agent in the cover gas, conventional methods required a high cost. In contrast, it is possible to increase the flow rate of the cover gas or the fireproof agent to extinguish immediately after combustion is detected.
Therefore, it is not necessary to supplying supply an excess amount of the cover gas or the fireproof agent, and thereby it is possible to decrease cost.
Furthermore, it is also possible to extinguish automatically, and control automatically the flow rate of the cover gas and supply rate of the fireproof agent.

### BRIEF DESCRIPTION OF THE DRAWINGS

[Figure 1] Fig. 1 is a schematic diagram showing an embodiment of the melting apparatus according to the present invention.
[Figure 2] Fig. 2 is a schematic diagram showing another embodiment of the melting apparatus according to the present invention.
[Figure 3] Fig. 3 is diagram showing variation with time of concentration of carbon monoxide in Experimental Example.

### EXPLANATION OF REFERENCE SYMBOLS

| | | | |
|---|---|---|---|
| 1: | furnace | 2: | crucible |
| 3: | heater | 4: | sensor |
| 5: | carbon monoxide concentration meter | | |
| 6: | control portion | 9: | flow regulating valve |
| 11 and 14: | on-off valve | 7, 8, 10, and 15: | pipe |
| 13: | display portion | M: | melting |

### BEST MODE FOR CARRYING OUT THE INVENTION

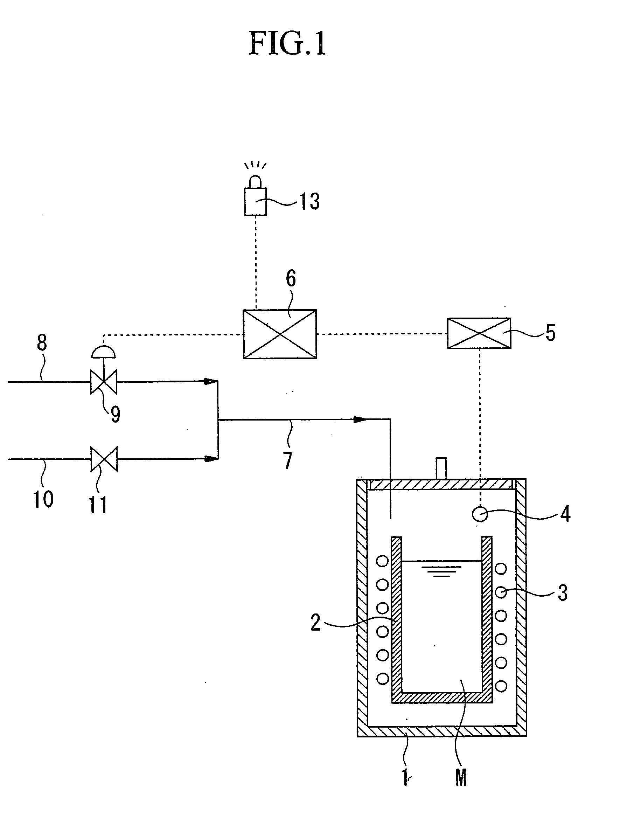

Fig. 1 is a schematic diagram showing an embodiment of the melting apparatus according to the present invention. In Fig. 1, a reference symbol 1 denotes a furnace. The furnace 1 is made of heat-resistant bricks, etc., and a crucible 2 for melting magnesium made of graphite, etc. is positioned therein. Magnesium in the crucible 2 is heated and melt by a heater 3 and becomes a magnesium melt.

A sensor 4 for measuring the concentration of carbon monoxide contained in the furnace 1 is positioned in the upper portion of the crucible 2 in the furnace 1. Signals from the sensor 4 are input to a carbon monoxide concentration meter 5.
The signals for the concentration of carbon monoxide output from the carbon monoxide concentration meter 5 are input to a control portion 6. At the control portion 6, the input signals are handled in a PID controller to output control signals. When the concentration of carbon monoxide excesses an upper limit which is previously fixed, the control portion 6 receives signals for carbon monoxide concentration from the carbon monoxide concentration meter 5, and sends an alarm signal to a display portion 13 such as a warning light and a warning buzzer.

A cover gas is supplied in the furnace 1 through a pipe 7, and thereby at least the vicinity of the surface of the melt in the crucible 2 in the furnace 1 is covered with the cover gas.
The cover gas contains a fireproof agent and a diluent gas. Examples of the fireproof agent include organic fluorine-containing compounds which are gaseous materials reacting with melted magnesium and forming a protective film at the surface of the melt such as sulfur hexafluoride, sulfur dioxide, FREON® 113a, or 1, 1, 1, 2, 2, 4, 5, 5, 5,-nonafluoro-4-(trifluoromethyl)-3-pentanone. Among these, 1, 1, 1, 2, 2, 4, 5, 5, 5,-nonafluoro-4-(trifluoromethyl)-3-pentanone is preferable because it has a low global warming potential.

Examples of the diluent gas include a gas containing at least carbon dioxide such as carbon dioxide, a mixture containing carbon dioxide, and air. The content of carbon dioxide in the diluent gas is preferably 0.1% or more, and more preferably 1% or more, in volume.

The fireproof agent is sent to a flow regulating valve 9 through a pipe 8 from a fireproof agent supplying source which is not shown in Fig. 1, and the flow rate of the fireproof agent is controlled based on the control signals from the control portion 6, and then the fireproof agent is sent to a pipe 7 at the controlled flow rate.
In contrast, the diluent gas passes through a pipe 10 from a diluent gas source which is not shown in Fig. 1 to an on-off valve 11, and this is further sent to the pipe 7. The diluent gas is mixed with the fireproof agent in the pipe 7 to be a cover gas, and then sent in the furnace 1.

In other words, a cover gas supplying portion comprises the pipes 7, 8, and 10, the flow regulating valve 9, and the on-off valve 11.

The operations of the melting apparatus will be explained below.
Magnesium in the crucible 2 is heated and melt to obtain a melt. At this time, the cover gas containing at least carbon dioxide and the fireproof agent is constantly supplied in the furnace 1 by supplying the fireproof agent from the pipe 8 and the diluent gas from the pipe 10.

The concentration of the fireproof agent in the cover gas varies depending on the kinds of the fireproof agent, the surface area of the melt magnesium, melting conditions, etc. However, when the fireproof agent is 1, 1, 1, 2, 2, 4, 5, 5, 5,-nonafluoro-4-(trifluoromethyl)-3-pentanone, the concentration of the fireproof agent in the cover gas is commonly in a range from 100 to 400 ppm in volume (below, ppm means ppm in volume without special note). When the concentration of 1, 1, 1, 2, 2, 4, 5, 5, 5,-nonafluoro-4-(trifluoromethyl)-3-pentanone in the cover gas is adjusted to this range, it is possible to prevent the combustion of magnesium.
While the cover gas is continuously supplied in the furnace 1, the concentration of carbon monoxide in the furnace 1 is measured by the sensor 4 and the carbon monoxide concentration meter 5, and the signal for the concentration is sent to the control portion 6.

When the magnesium melt in the furnace 1 does not burn, the concentration of carbon monoxide in the furnace 1 is almost maintained at low values, for example, less than 10 ppm.
If the magnesium melt in the crucible 2 burns by any chance, the concentration of carbon monoxide in the furnace 1 is suddenly increased, for example, to 15 to 20 ppm. The increase of the concentration of carbon monoxide is caused by forcibly reacting oxygen constituting carbon dioxide in the cover gas with magnesium as oxygen needed to burn, as shown in the following chemical formula.

Mg + CO₂ → MgO + CO

The control portion 6 judges that magnesium melt burns based on the rapid increase of the concentration of carbon monoxide, and sends a signal to the flow regulating valve 9 to increase the flow rate of the fireproof agent while sending an alarm signal to the display portion 13.
When the display portion 13 receives the alarm signal, an alarm light blinks or a speaker beeps.

In addition, when the flow regulating valve 9 receives the signal, this increases the open level to increase the flow rate of the fireproof agent and thereby a large amount of the fireproof agent is sent to the pipe 7. Due to this, the cover gas containing the fireproof agent with high concentration such as 500 to 20,000 ppm is sent in the furnace 1 to extinguish the combustion of magnesium.

The extinguishing of the combustion is confirmed by the decrease of the concentration of carbon monoxide by the carbon monoxide concentration meter 5. Specifically, when the concentration of carbon monoxide is 10 ppm or less, it is judged that the combustion is extinguished. When the control portion 6 judges that the combustion has been extinguished based on the decrease of the concentration of carbon monoxide, the control portion 6 stops sending the alarm signal to the display portion 13.

In addition, the control portion 6 sends a signal to the flow regulating valve 9 to decrease of the flow rate of the fireproof agent. The flow regulating valve 9 decreases the open level to decrease the flow rate of the fireproof agent, and supplies the cover gas having a normal concentration via the pipe 7 in the furnace 1.

As explained above, it is possible to detect rapidly the combustion of the magnesium melt by measuring the concentration of carbon monoxide in the furnace 1. When the combustion of the magnesium melt is confirmed, it is possible to extinguish the combustion by increasing immediately the amount of the fireproof agent contained in the cover gas.

In addition, after the combustion has been extinguished, it is possible to decrease automatically the amount of the fireproof agent in the cover gas to the normal amount. Therefore, if the magnesium burns by any chance, it is possible to extinguish the combustion automatically, and it is also possible to return automatically to normal operations after extinction.

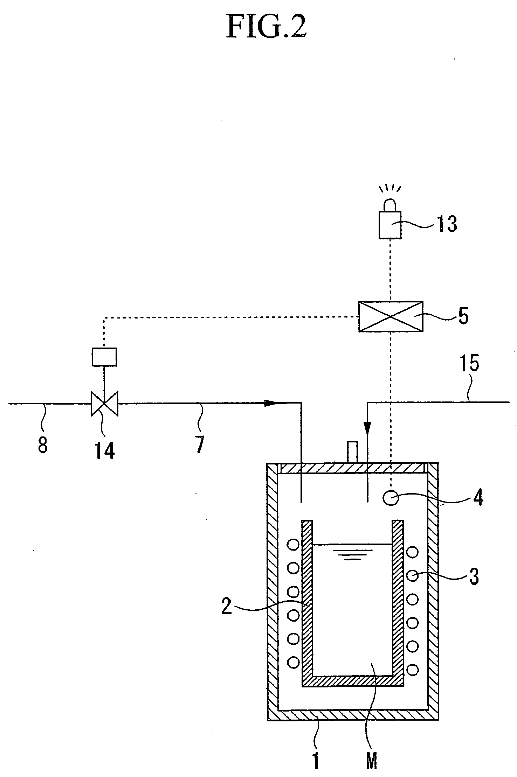

Fig. 2 is a schematic diagram showing another embodiment of the melting apparatus according to the present invention. The components shown in Fig. 2 which are the same as the components shown in Fig. 1 have the same reference numerals as shown in Fig. 1. Thereby, explanations for those same components are omitted in this embodiment.
In this embodiment, the carbon monoxide concentration meter 5 comprises an output device. The carbon monoxide concentration meter 5 with an output device measures the concentration of carbon monoxide in the furnace 1, and when the measured concentration excesses the upper limit which is previously fixed, for example, 15 ppm, this sends an alarm signal the display portion 13 while outputting a signal showing that the concentration of carbon monoxide excesses the upper limit to the on-off valve 14.
In contrast, when the concentration is less than the upper limit, the concentration meter 5 with an output device instructs the display portion 13 to shut off the alarm while outputting a signal showing that the concentration of carbon monoxide is less than the upper limit to the on-off valve 14. The carbon monoxide concentration meter 5 with an output device has the same functions as those of the control portion 6 as well.

When the on-off valve 14 receives the signal showing that the concentration excesses the upper limit from the carbon monoxide concentration meter 5, the on-off valve 14 opens. In contrast, when the on-off valve 14 receives the signal showing that the concentration is less than the upper limit from the carbon monoxide concentration meter 5, the on-off valve 14 closes. The on-off valve 14 allows or blocks the flow of the fireproof agent via the pipe 8. At normal conditions, the on-off valve 14 blocks the flow of the fireproof agent.

The cover gas containing carbon dioxide and the fireproof agent is sent constantly from the pipe 15 in the furnace 1. The concentration of the fireproof agent in the cover gas is adjusted in a range from 100 to 400 ppm, and thereby the combustion of magnesium is prevented.
In other words, the cover gas supplying portion comprises the pipes 7, 8, 15, and the on-off valve 14.

In order to operate the melting apparatus, first, the cover gas is constantly supplied from the pipe 15 in the furnace 1, and the concentration of carbon monoxide in the furnace 1 is continuously measured by the carbon monoxide concentration meter 5.
When the concentration of carbon monoxide in the furnace 1 is less than the upper limit, it is judged that the magnesium melt is not burning, and the cover gas is continuously supplied in the furnace 1 from the pipe 15.

When the concentration of carbon monoxide in the furnace 1 excesses the upper limit, it is judged that the magnesium melt is burning, and a signal showing that the magnesium melt is burning is sent to the on-off valve 14. When the on-off valve 14 receives the signal, the on-off valve 14 immediately opens, and allows the fireproof agent flow from the pipe 8 to the pipe 7 and allows the concentration of the fireproof agent to be in a range from 500 to 20,000 ppm. Simultaneously, the carbon monoxide concentration meter 5 sends an alarm signal to the display portion 13.

When the concentration of carbon monoxide in the furnace 1 is less than the upper limit, it is judged that the combustion of the magnesium has been extinguished, and the carbon monoxide concentration meter 5 sends a signal showing that the combustion has been extinguished to the on-off valve 14 and the display portion 13. After that, the on-off valve 14 closes and the display portion 13 stops warming notice.
Due to this, the cover gas containing the fireproof agent at normal concentration is again sent in the furnace 1 from the pipe 15.

The melting apparatus of this embodiment obtains the same effects as those of the melting apparatus in the previous embodiment.

Below, experimental results obtained using the melting apparatus will be shown.

### (Experimental Example)

In this Example, the melting apparatus shown in Fig. 1 was used. The inner diameter of the furnace 1 was 300 mm, and the height was 670 mm. The inside of the furnace 1 could be watched through the heat-resistant glass in the furnace cover.
The crucible 2 having an inner diameter of 200 mm and a height of 300 mm was positioned in the furnace 1. A magnesium melt, which was obtained by melting 4.7 kg of magnesium alloy (AD91D), was put in the crucible 2. The temperature of the magnesium melt was maintained at 680ºC.

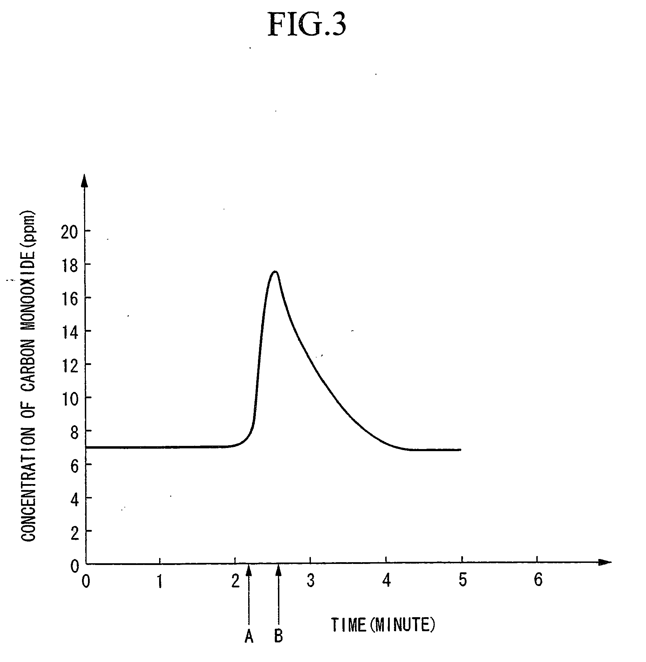

A diluted gas, which was obtained by diluting 1, 1, 1, 2, 2, 4, 5, 5, 5,-nonafluoro-4-(trifluoromethyl)-3-pentanone which is a fireproof agent with carbon dioxide such that the concentration be 200 ppm, was used as a cover gas. The cover gas was supplied to the furnace 1 from the pipe 7 at a rate of 7.5 litter/min. The concentration of carbon monoxide in the furnace 1 was measured by the sensor 4 and the carbon monoxide concentration meter 5.
The variation of the concentration of carbon monoxide with time is shown in Fig. 3.

When combustion of magnesium in the crucible 2 was not confirmed visually through the heat-resistant glass, the concentration of carbon monoxide remained constant at about 7 ppm.
When combustion of a part of the magnesium melt was oserved (point A), the concentration of carbon monoxide increased suddenly to 17.5 ppm.

After immediately the combustion of the magnesium melt was confirmed, the open level of the flow regulating valve 9 was increased in order to decrease the supply rate of the fireproof agent, and the concentration of the fireproof agent in the cover gas was increased to 800 ppm. Thereby, the concentration of carbon monoxide was decreased, and after 90 seconds, the concentration returned to 7 ppm which was the normal concentration. It was confirmed that the combustion was extinguished by visual observation.

It was judged from the results that when the concentration of carbon monoxide in the furnace 1 was suddenly larger than the normal concentration, combustion of the magnesium happened. Then, it was also confirmed that the combustion was extinguished by increasing the concentration of the fireproof agent in the cover gas.

In Experimental Examples, when the concentration of carbon monoxide increased and the combustion of the magnesium was confirmed, the concentration of the fireproof agent in the cover gas increased. However, it is also possible to increase the supply rate of the cover gas itself to the furnace. For example, it is also possible to increase the supply rate of the cover gas to the furnace by replacing the on-off valve 11 in Fig. 1 to a flow regulating valve, and sending the signal from the control portion 6 to the flow regulating valve.

In addition, the concentration of carbon monoxide in the furnace 1 was measured. However, the concentration of carbon monoxide is also measured by forming a discharge pipe for discharging gas in the furnace 1, and measuring the concentration of carbon monoxide in the discharged gas.
Furthermore, the concentration of carbon monoxide may be measured continuously or intermittently, for example, each 10 to 20 seconds by the concentration meter 5.

### INDUSTRIAL APPLICABILITY

The present inventors found that when carbon dioxide is added in a cover gas, and a magnesium melt burns, concentration of carbon monoxide in the cover gas immediately increases. It is possible to detect and judge the combustion immediately and certainly by measuring the concentration of carbon monoxide. Therefore, if a magnesium melt burns by any chance, the combustion is promptly extinguished.
In addition, since combustion was prevented by supplying constantly excess flow rate of the cover gas or the fireproof agent in the cover gas, conventional methods required a high cost. In contrast, it is possible to increase the flow rate of the cover gas or the fireproof agent immediately after a combustion is detected and to extinguish it. Therefore, it is not necessary to supply constantly an excess amount of the cover gas or the fireproof agent, and thereby it is possible to decrease the cost.
Furthermore, it is also possible to extinguish automatically, control automatically the flow rate of the cover gas, and the supply rate of the fireproof agent.

## Claims

1. A method for melting magnesium or a magnesium alloy while supplying a cover gas containing carbon dioxide and a fireproof agent in a furnace for melting magnesium or a magnesium alloy and obtaining a magnesium melt or a magnesium alloy melt to cover the surface of the magnesium melt,
wherein a concentration of carbon monoxide in the furnace or gas discharged from the furnace is measured and magnesium combustion in the furnace is detected based on the concentration of carbon monoxide.

2. A method for melting magnesium according to claim 1, wherein the magnesium combustion is prevented by increasing a flow rate of the cover gas or concentration of the fireproof agent contained in the cover gas when magnesium combustion is confirmed.

3. A method for melting magnesium according to claim 1, wherein the fireproof agent is 1, 1, 1, 2, 2, 4, 5, 5, 5,-nonafluoro-4-(trifluoromethyl)-3-pentanone.

4. A melting apparatus for magnesium comprising:
a furnace for melting magnesium and obtaining a magnesium melt;
a cover gas supplying portion for supplying a cover gas containing carbon dioxide and a fireproof agent in the furnace;
a carbon monoxide concentration meter for measuring concentration of carbon monoxide in the furnace or gas discharged from the furnace; and
a control portion for controlling a supply rate of the fireproof agent in the furnace based on the concentration of carbon monoxide measured by the carbon monoxide concentration meter.

5. A melting apparatus for magnesium comprising:
a furnace for melting magnesium and obtaining a magnesium melt;
a cover gas supplying portion for supplying a cover gas containing carbon dioxide and a fireproof agent in the furnace;
a carbon monoxide concentration meter for measuring a concentration of carbon monoxide in the furnace or gas discharged from the furnace; and
a control portion for controlling a supply rate of the cover gas in the furnace based on the concentration of carbon monoxide measured by the carbon monoxide concentration meter.

6. A melting apparatus for magnesium according claim 4 or 5, wherein the control portion has signal generation function which emits a signal showing magnesium combustion when magnesium combustion is confirmed, and a display portion for showing magnesium combustion based on the signal.
